(19) Europäisches Patentamt
European Patent Office
Office européen des brevets

(11) **EP 3 562 197 B1**

(12) **FASCICULE DE BREVET EUROPEEN**

(45) Date de publication et mention de la délivrance du brevet:
**21.02.2024  Bulletin 2024/08**

(21) Numéro de dépôt: **19170917.9**

(22) Date de dépôt: **24.04.2019**

(51) Classification Internationale des Brevets (IPC):
**H04W 8/18** *(2009.01)*    **H04W 24/08** *(2009.01)*
**H04W 48/18** *(2009.01)*

(52) Classification Coopérative des Brevets (CPC):
**H04W 48/18;** H04W 8/183; H04W 24/08

(54) **PROCÉDÉ DE GESTION DES ACCÈS À UNE INFRASTRUCTURE DE TÉLÉCOMMUNICATION PAR UN MODEM ET DISPOSITIFS ASSOCIÉS**

VERFAHREN ZUR VERWALTUNG DES ZUGANGS ZU EINER TELEKOMMUNIKATIONSINFRASTRUKTUR DURCH EIN MODEM UND ZUGEHÖRIGE GERÄTE

METHOD FOR MANAGING THE ACCESS TO A TELECOMMUNICATION INFRASTRUCTURE BY A MODEM AND ASSOCIATED DEVICES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.04.2018  FR 1800355**

(43) Date de publication de la demande:
**30.10.2019  Bulletin 2019/44**

(73) Titulaire: **THALES**
**92400 Courbevoie (FR)**

(72) Inventeurs:
• **BITTARD, Anne**
**92622 Gennevilliers (FR)**
• **BLONDEZ, Jérôme**
**59130 Lambersart (FR)**

(74) Mandataire: **Lavoix**
**2, place d'Estienne d'Orves**
**75441 Paris Cedex 09 (FR)**

(56) Documents cités:
EP-A1- 2 723 047    US-A1- 2012 196 644
US-A1- 2014 120 909    US-A1- 2014 192 634
US-A1- 2015 119 101    US-A1- 2016 127 176
US-A1- 2017 150 470

**Description**

La présente invention concerne un procédé de gestion des accès à une infrastructure de télécommunication. La présente invention se rapporte également à un produit programme d'ordinateur, un support lisible d'informations et une infrastructure associés.

Pour l'ensemble des sigles dans la description qui suit, le lecteur est invité à se reporter à la partie LEXIQUE.

Des objets sont souvent conçus pour pouvoir communiquer entre eux sans intervention humaine, notamment dans le cadre du développement récent de l' « Internet des objets ». Ces objets communiquent en général entre eux via des réseaux de communication, qui sont souvent des réseaux sans fil tels que des réseaux de téléphonie mobile. Pour accéder à de tels services de communication, un objet connecté utilise fréquemment un modem disposant d'un émetteur-récepteur radio dans lequel est installé un dispositif d'attachement, comprenant généralement une carte SIM fournie par un MNO, pour accéder au réseau dudit MNO.

Toutefois, il existe des situations dans lesquelles l'utilisation de certains services ou réseaux est dégradée, voire impossible. L'objet n'est, par exemple, plus en mesure d'accéder au réseau, ou ne dispose pas d'un débit suffisant pour mettre en oeuvre certaines de ses fonctions associées à la communication.

De telles situations résultent souvent de la perte ou de la dégradation de la couverture radio du réseau du MNO causée, par exemple, par un défaut technique dudit réseau, ou par un maillage territorial incomplet de la couverture radio dudit MNO lorsque les objets connectés sont mobiles (par exemple des dispositifs embarqués dans des véhicules) ou déplaçables (par exemple des objets destinés à être utilisés sur zone lors d'interventions ou d'observations de situations spécifiques, tels que des capteurs ou encore des équipements d'intervention pour des équipes de secours ou de sécurité).

Il est connu des procédés des documents US 2012/196644 A1, US 2015/119101 A1, US 2014/190909 A1, US 2014/192634 A1 et US 2017/150470 A1 ne permettant pas d'obtenir une résilience satisfaisante.

Il existe donc un besoin de disposer d'une solution permettant d'améliorer la résilience de la connexion d'objets connectés.

A cet effet, il est proposé un procédé de gestion des accès à une infrastructure de télécommunication selon la revendication 1.

Suivant des modes de réalisation particuliers, le procédé de gestion comprend une ou plusieurs des caractéristiques des revendications 2 à 6, prise(s) isolément ou suivant toutes les combinaisons techniquement possibles.

Il est également proposé un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en oeuvre d'un procédé tel que défini précédemment ou d'une étape d'un procédé tel que défini précédemment lorsque le programme d'ordinateur est mis en oeuvre sur l'unité de traitement des données.

Il est, en outre, proposé un support lisible d'informations sur lequel est mémorisé un programme d'ordinateur comprenant des instructions de programme, le programme d'ordinateur étant chargeable sur une unité de traitement de données et adapté pour entraîner la mise en oeuvre d'un procédé tel que défini précédemment ou d'une étape d'un procédé tel que défini précédemment lorsque le programme d'ordinateur est mis en oeuvre sur l'unité de traitement des données.

Il est également proposé une infrastructure de télécommunication selon la revendication 9.

D'autres caractéristiques et avantages de l'invention apparaîtront à la lecture de la description qui suit de modes de réalisation de l'invention, donnée à titre d'exemple uniquement et en référence aux dessins qui sont :

- figure 1, une représentation schématique d'une infrastructure de télécommunication ;
- figure 2, un modem faisant partie de l'infrastructure de la figure 1,
- figure 3, un logigramme illustrant un premier exemple de mise en oeuvre d'un procédé de gestion des accès à l'infrastructure de la figure 1, correspondant au premier ou au deuxième mode de réalisation décrits-ci-après ou à un mode de réalisation mixant ces deux modes, et
- figure 4, un logigramme illustrant un deuxième exemple de mise en oeuvre d'un procédé de gestion des accès à l'infrastructure de la figure 1, correspondant au troisième mode de réalisation décrit-ci-après.

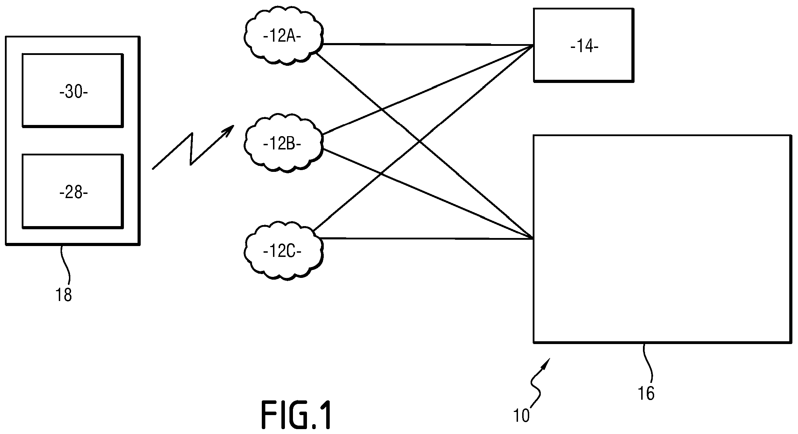

La figure 1 représente une infrastructure 10 de télécommunication comprenant au moins deux réseaux 12 de télécommunication, un équipement de contrôle d'accès 14, un dispositif de gestion 16 et des modems 18.

Un réseau 12 est propre à mettre en oeuvre des communications avec des modems 18 selon différents protocoles de télécommunication.

Les réseaux 12 appartiennent à des MNO qui sont tous différents entre eux.

Dans le cas de la figure 1, l'infrastructure 10 comprend un premier réseau $12_A$, un deuxième réseau $12_B$ et un troisième réseau $12_C$ appartenant respectivement à trois MNO nationaux distincts entre eux, notés $MNO_A$, $MNO_B$ et $MNO_C$.

Chaque réseau 12 est, par exemple, propre à mettre en oeuvre des protocoles de télécommunication du type 2G, 3G, 4G et suivants.

Chaque réseau 12 est relié à l'équipement de contrôle d'accès 14 qui est propre à gérer l'authentification et le contrôle d'accès du modem 18 aux réseaux 12 pour la mise en oeuvre de services mobiles.

Parmi les réseaux 12, un des réseaux est un réseau préféré par le modem 18. Il sera considéré par la suite que le premier réseau $12_A$ est le réseau préféré.

Par exemple, le $MNO_A$ associé au premier réseau $12_A$ est un MNO préféré par rapport au $MNO_B$ associé au deuxième réseau $12_B$.

Par exemple, l'utilisateur du modem 18 a négocié un accord de partenariat avec le MNO préféré selon lequel des avantages spécifiques sont offerts à l'utilisateur par le MNO préféré.

Un tarif préférentiel appliqué par le MNO préféré à l'utilisateur est un exemple d'avantage.

Un autre exemple d'avantage est un statut prioritaire accordé par le MNO préféré aux données transmises par le modem 18 via le premier réseau $12_A$, par rapport aux données transmises par d'autres modems 18.

Un autre exemple d'avantage est que le premier réseau $12_A$ offre une qualité de service supérieure au deuxième réseau $12_B$ dans une zone géographique spécifique.

Un autre exemple d'avantage est que le premier réseau $12_A$ est un réseau dédié à certains utilisateurs et peut par exemple fonctionner sur des fréquences dédiées, garantissant ainsi un meilleur accès aux ressources radio qu'un réseau public et une priorisation optimale des services à ces utilisateurs.

L'équipement de contrôle d'accès 14, également désigné par le sigle HSS, comprend une base de données.

Dans le présent mode de réalisation, le HSS 14 est celui d'un MVNO, ou de son MVNE.

Le HSS 14 est propre à mémoriser, pour chaque modem 18, un registre de réseaux autorisés comprenant des réseaux. En particulier, le registre de réseaux autorisés comprend un identifiant de chaque réseau 12 autorisé.

Par « réseau autorisé », il est entendu un réseau auquel le modem 18 est en mesure de s'attacher à partir d'un IMSI déterminé. Dit autrement, un réseau autorisé désigne un réseau sur lequel le modem 18 est susceptible d'être enregistré avec un IMSI pour pouvoir s'y attacher.

Dans le présent mode de réalisation, les réseaux du registre de réseaux autorisés sont tous associés à un même IMSI. En d'autres termes, l'IMSI utilisé par le modem 18 pour s'attacher aux différents réseaux du registre de réseaux autorisés est toujours le même.

Une telle situation est généralement désignée par l'expression « profil d'abonné multi-opérateur ».

Dans d'autres modes de réalisation, d'autres HSS sont présents et correspondent, par exemple, à des équipements de MNO nationaux ou étrangers. Les autres HSS contiennent d'autres IMSI correspondant à des modems 18 pour attachement sur les réseaux desdits MNO étrangers ou pour attachement à un MNO national en mode « roaming » national ou international. Le registre de réseaux autorisés contient alors différents IMSI.

Dans le présent mode de réalisation, le dispositif de gestion 16 appartient à un opérateur de services, notamment un MVNO.

Le dispositif de gestion 16 est propre à administrer le service d'accès à plusieurs réseaux 12 fourni par l'opérateur de services. Le dispositif de gestion 16 permet notamment audit opérateur de services de déclarer et mémoriser les droits d'accès (profils réseau PR accessibles) de l'utilisateur final au service ainsi que les identifiants IMSI et les profils de services applicables à chaque profil réseau $PR_A$ ou $PR_B$ utilisé, d'administrer à distance le modem 18 (notamment la mise à jour du logiciel, et des droits et paramétrages propres à chaque utilisateur), et de piloter de manière asynchrone le service fourni (notamment le contrôle des droits d'accès au service et la remontée d'événements).

Les échanges entre le dispositif de gestion 16 et le modem 18 sont réalisés via une connexion de données mobiles au travers des réseaux de télécommunication 12. Il est à noter que le dispositif de gestion 16 et le modem 18 sont aptes à fonctionner et à être administrés par l'opérateur de services indépendamment des équipements de contrôle d'accès des opérateurs des réseaux de télécommunication 12 utilisés.

Il est à noter que le modem 18 est apte à fonctionner localement, c'est-à-dire même en l'absence temporaire de connexion avec le dispositif de gestion 16.

Les modems 18 sont propres à mettre en oeuvre des télécommunications avec les réseaux 12.

Le terme « modem », (mot-valise, pour « modulateur-démodulateur »), se rapporte à un périphérique servant à communiquer avec des utilisateurs distants par l'intermédiaire d'un réseau.

Chaque modem 18 est, par exemple, un dispositif électronique propre à recevoir, collecter, générer ou à exploiter des données, et est propre à transmettre les données à travers chaque réseau 12 auquel le modem 18 est susceptible de s'attacher. Les données ainsi échangées peuvent, par exemple, comprendre des données de services de communication (voix, image, vidéo), des données de télémesure ou des données de télémétrie.

Lorsque le modem 18 sert uniquement à effectuer de la conversion et de l'acheminement statique des flux entre des points, le modem 18 est un modem gateway.

Lorsque le modem 18 possède, en outre, la capacité d'effectuer de l'acheminement dynamique, le modem 18 est modem routeur.

Chaque modem 18 comprend un module d'attachement 28, et un module de décision 30 distinct du module d'attachement 28.

Le module d'attachement 28 et le module de décision 30 du modem 18 contiennent chacun des instructions logicielles qui, une fois exécutées par un ou plusieurs processeurs, mettent chacun en oeuvre au moins certaines étapes d'un procédé de gestion des accès à l'infrastructure 10.

Le module d'attachement 28 du modem 18 est propre à déclencher la mise en oeuvre d'une étape d'initiation d'un attachement du modem 18 à un réseau 12 au moyen d'un numéro d'identification mobile.

De préférence, le module d'attachement 28 du modem 18 est propre à déclencher la mise en oeuvre d'une étape d'initiation d'un attachement du modem 18 à un réseau 12, le réseau 12 étant spécifié par le module de décision 30 du modem 18 et étant compatible avec le profil d'abonné mémorisé dans le serveur de contrôle d'accès 14, également compatible avec le registre de réseaux autorisés mémorisé dans le HSS 14.

Dans le présent mode de réalisation, le numéro d'identification mobile est un IMSI. Dans ce qui suit, le numéro d'identification mobile est désigné par le sigle IMSI.

Par « attachement », il est fait référence aux procédures décrites par les normes de télécommunication et qui consistent à identifier puis à authentifier un modem au sein d'un réseau.

Le module de décision 30 du modem 18 est propre à mémoriser un registre de réseaux autorisés.

Dans le présent mode de réalisation, le registre de réseaux autorisés mémorisé dans le module de décision 30 du modem 18 correspond au registre de réseaux autorisés mémorisé dans le ou les HSS 14. En d'autres termes, les réseaux autorisés au niveau du ou des HSS 14 sont les mêmes que les réseaux autorisés au niveau du module de décision 30 du modem 18.

Dans d'autres modes de réalisation, le registre de réseaux autorisés mémorisé dans le module de décision 30 du modem 18 est moins étendu que le registre de réseaux autorisés mémorisé dans le HSS 14, c'est-à-dire qu'il contient moins de réseaux autorisés. Une telle situation résulte, par exemple, d'un paramétrage du module de décision 30 consistant à interdire au modem 18 l'accès à un ou plusieurs réseaux figurant dans le registre de réseaux autorisés mémorisé dans le HSS 14.

Dans d'autres modes de réalisation, le registre de réseaux autorisés mémorisé dans le module de décision 30 du modem 18 est plus étendu que le registre de réseaux autorisés mémorisé contenus dans le HSS 14, c'est-à-dire qu'il contient plus de réseaux autorisés. Une telle situation résulte, par exemple, d'un paramétrage du module de décision 30 consistant à autoriser le modem 18 à accéder à des réseaux de type WIFI, filaire ou satellite, qui ne sont pas listés dans le registre de réseaux autorisés mémorisé dans le HSS 14.

Le registre des réseaux autorisés comprend, par exemple, un identifiant du réseau préféré, permettant au module de décision 30 du modem 18 d'identifier, parmi les réseaux 12 autorisés, lequel est le réseau préféré.

Le modem 18 ayant réussi ou non à s'attacher à un réseau 12, dit réseau courant, le module de décision 30 est propre à mettre en oeuvre une étape de détermination d'un réseau 12 choisi.

L'étape de détermination du réseau choisi 12, mise en oeuvre par le module de décision 30, consiste à fournir au module d'attachement 28 du modem 18 un message de bascule pour le déclenchement de la mise en oeuvre de l'étape d'attachement à un réseau choisi, distinct du réseau courant.

Dans l'étape de détermination du réseau choisi 12, le réseau choisi est choisi parmi les réseaux du registre de réseaux autorisés mémorisé dans le module de décision 30.

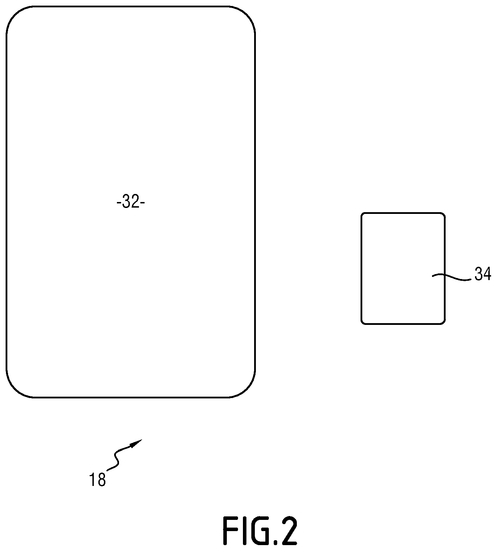

La figure 2 illustre un exemple de modem 18 de l'infrastructure 10 de la figure 1.

Dans l'exemple de la figure 2, le modem 18 comprend un terminal 32 et un dispositif d'attachement 34 propre à être installé dans le terminal 32.

De fait, le terminal 32 du modem 18 est notamment propre à gérer les ressources radio, l'établissement des connexions ainsi que des services d'itinérance et comprend un émetteur-récepteur pour la liaison radio avec des stations de base 2G, 3G, 4G et suivantes, et éventuellement à d'autres réseaux radio comme le WIFI ou filaires, un processeur, une mémoire et un système d'exploitation.

Le système d'exploitation du terminal 32 du modem 18 est, par exemple, de type Linux.

Dans le présent mode de réalisation, le dispositif d'attachement 34 du modem 18 est une carte SIM 34.

La carte SIM 34 est propre à gérer des réseaux autorisés, c'est-à-dire des réseaux figurant dans le registre de réseaux autorisés mémorisé dans le HSS 14 et/ou dans le module de décision 30 du modem 18.

La carte SIM 34 est une puce qui comprend un microcontrôleur et une mémoire, et qui est propre à mémoriser des informations spécifiques à un utilisateur utilisées pour la mise en oeuvre de l'initiation d'un attachement à un réseau 12.

La carte SIM est, notamment, configurée pour gérer un profil d'abonné multi-opérateurs.

Selon une variante envisageable, le dispositif d'attachement 34 du modem 18 est une carte USIM. La carte USIM est propre à gérer plusieurs profils d'abonné, chaque profil d'abonné étant mono-opérateur.

De façon non limitative, le dispositif d'attachement 34 du modem 18 est propre à mémoriser au moins un IMSI et un ensemble d'informations propres à prouver l'authenticité de l'IMSI.

Dans le mode de réalisation des figures 1 et 2, le module de décision 30 du modem 18 est mémorisé dans une mémoire du terminal 32 et le module d'attachement 28 est mémorisé dans une mémoire du dispositif d'attachement 34 du modem 18. De fait, les instructions logicielles du module de décision 30 du modem 18 sont exécutées par le processeur du terminal 32, et les instructions logicielles du module d'attachement 28 du modem 18 sont exécutées par le microcontrôleur du dispositif d'attachement 34 sur la base d'instructions émises par le module de décision 30.

Dans ce cas, le module de décision 30 est, par exemple, une application propre à être installée sur le terminal 32 du modem 18 avec un système d'exploitation, par exemple de type Linux.

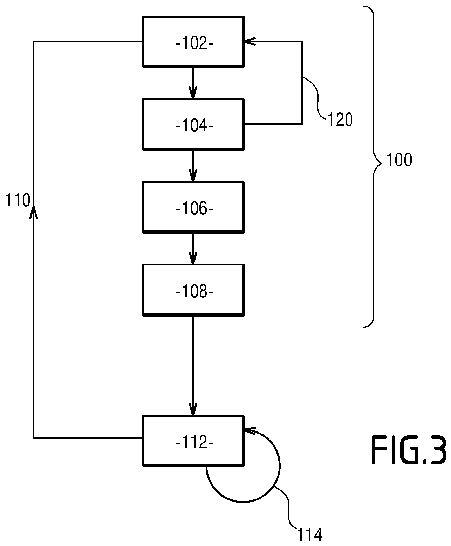

Le fonctionnement de l'infrastructure 10 et notamment de la gestion des accès du modem 18 aux différents réseaux $12_A$ et $12_B$ est maintenant décrit en référence à la figure 3 qui illustre un ordinogramme d'un exemple de mise en oeuvre d'un procédé de gestion des accès à l'infrastructure 10.

Le procédé de gestion des accès comprend une phase 100 de choix d'un meilleur réseau 12.

La phase de choix 100 est, par exemple, mise en oeuvre au démarrage du modem 18. En particulier, la phase de choix 100 est mise en oeuvre avant tout autre attachement du modem 18 à un réseau 12.

Comme expliqué ci-après, la phase de choix 100 est susceptible de déboucher sur l'attachement du modem 18 à un réseau 12 choisi qui est susceptible de dépendre de critères qui peuvent varier au cours du temps.

Selon un premier mode de fonctionnement, la phase de choix 100 est mise en oeuvre périodiquement (comme l'indique la flèche 110 formant une boucle entre les rectangles des signes de référence 112 et 102 sur la figure 3), notamment lorsque le modem 18 est attaché à un réseau 12 qui n'est pas le réseau $12_A$ préféré, ou lorsque le modem 18 est attaché à un réseau 12 qui n'est pas le réseau 12 qui a été choisi lors de la phase de choix 100 qui a été mise en oeuvre au démarrage du modem 18.

Il est considéré que des étapes de paramétrage des équipements et bases de données, notamment du ou des HSS 14, du module de décision 30 et du module d'attachement 28 du modem 18, ont été préalablement mises en oeuvre pour aboutir à l'infrastructure 10 des figures 1 et 2.

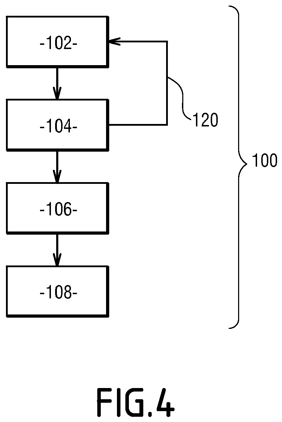

La phase de choix 100 comporte une étape 102 d'attachement à chaque réseau 12 et une étape 104 de mesure qui sont répétées pour chaque réseau 12 (comme l'indique la flèche 120 formant une boucle entre les rectangles des signes de référence 104 et 102 sur la figure 3 ou la figure 4), une étape 106 de détermination du réseau choisi et une étape 108 d'attachement au réseau choisi.

Lors de l'étape 102 d'attachement à chaque réseau 12, le modem 18 s'attache ou tente de s'attacher à un réseau 12.

Lors de l'étape de mesure 104, une qualité de service fournie par chaque réseau 12 est mesurée par le modem 18 lorsque le modem 18 est attaché au réseau 12 considéré. Ainsi, une qualité mesurée est estimée par le modem 18 pour chaque réseau 12.

Par « qualité mesurée », il est entendu une donnée mesurable sur laquelle est basée la décision de mise en oeuvre d'un basculement d'un réseau courant vers un réseau choisi.

En particulier, la qualité mesurée est propre à être comparée à un seuil, appelé « seuil de qualité de service minimum ». Lorsque la qualité mesurée est supérieure ou égale au seuil, la qualité mesurée est dite « suffisante ». Lorsque la qualité mesurée est strictement inférieure au seuil, la qualité mesurée est dite « insuffisante ».

La qualité mesurée est notamment définie comme étant une combinaison de critères élémentaires, un critère élémentaire n'étant pas décomposable en plusieurs critères.

La qualité de service regroupe des critères élémentaires qui sont de nature quantitative et fonction des différents services mobiles souscrits et utilisés par l'utilisateur, tel que par exemple un débit de data inférieur à 10 kbit/s, ou un dépassement de seuil sur un autre paramètre de qualité de service.

De fait, une qualité mesurée $C$ s'exprime, par exemple, en fonction de n critères élémentaires notés c; de la façon suivante :

$$C = \sum_{i=1}^{n} \alpha_i c_i$$

où n est un entier et où chaque $\alpha_i$ est un coefficient de pondération réel associé au critère élémentaire $c_i$.

Il est à noter que la qualité mesurée est définie ci-dessus pour un réseau 12 comme étant estimée à partir de critères qui sont mesurables par le modem 18 lorsque le modem 18 est attaché au réseau 12 considéré. Lorsque le modem 18 ne parvient pas à s'attacher au réseau 12, la qualité mesurée est considérée comme étant insuffisante pour le réseau 12.

Les étapes 102 et 104 sont, par exemple, mises en oeuvre successivement et de manière itérative, au sens où le modem 18 s'attache ou tente de se connecter à un réseau 12, mesure la qualité de service du réseau 12, puis s'attache à un autre réseau 12 pour en mesurer la qualité. Ces actions d'attachement (ou tentative d'attachement) et de mesure sont notamment répétées successivement pour chaque réseau 12 pour former les étapes d'attachement à chaque réseau 102 et de mesure 104. Cela est représenté schématiquement par la flèche 120 sur la figure 3 ou la figure 4.

Lorsque l'étape de mesure 104 a été mise en oeuvre pour tous les réseaux 12, l'étape de détermination du réseau choisi 106 est mise en oeuvre.

Au cours de l'étape de détermination du réseau choisi 106, le modem 18 décide de s'attacher à un réseau 12, appelé « réseau choisi ». En particulier, le module de décision 30 décide d'attacher le modem 18 au réseau choisi.

Lors de l'étape de détermination du réseau choisi 106, un message de bascule pour le déclenchement de la mise en oeuvre de l'étape 108 d'attachement au réseau choisi est transmis par le module de décision 30 au module d'attachement 28 du modem 18 si le réseau 12 choisi est différent du réseau 12 courant.

Le message de bascule comporte une information d'identification du réseau choisi 12, notamment un identifiant du réseau choisi 12.

Le réseau choisi est notamment choisi parmi :

- le réseau préféré $12_A$, si le réseau préféré $12_A$ présente une qualité mesurée suffisante, et
- le réseau 12 ayant la qualité mesurée la plus grande, également appelé « meilleur réseau ».

Le choix du réseau préféré $12_A$ ou du réseau 12 ayant la qualité mesurée la plus grande dépend notamment d'un paramétrage du module de décision 30.

Par exemple, le réseau choisi est le réseau préféré $12_A$ si le réseau préféré $12_A$ présente une qualité mesurée suffisante, et est le réseau ayant la qualité mesurée la plus grande dans le cas contraire.

Selon une variante, le réseau choisi est :

- le réseau préféré $12_A$ si le réseau préféré $12_A$ présente une qualité mesurée suffisante, ou
- le réseau 12 choisi lors de la phase de choix 100 mise en oeuvre au démarrage du modem 18, si ce réseau 12 présente une qualité mesurée suffisante et que le réseau préféré $12_A$ présente une qualité mesurée insuffisante, ou
- le réseau ayant la qualité mesurée la plus grande dans les autres cas.

Les critères mis en oeuvre lors de l'étape de détermination du réseau choisi 106 sont, par exemple, paramétrables par le dispositif de gestion 16.

Par exemple, le dispositif de gestion 16 est propre à modifier, dans le dispositif de gestion 12, les coefficients de pondération $\alpha_i$, les critères élémentaires $c_i$, l'identifiant du réseau préféré $12_A$, la fréquence de mise en oeuvre de la phase de choix 100, le seuil de qualité de service minimum, ou encore la liste des réseaux 12 autorisés mémorisée dans le registre.

Lors de l'étape 108 d'attachement, le modem 18 s'attache au réseau choisi 12 si le réseau choisi est différent du réseau courant 12, ou si le modem 18 n'est attaché à aucun réseau avant que la phase de choix 100 soit mise en oeuvre.

A la réception du message de bascule, le dispositif d'attachement 34 du modem 18, à travers le module d'attachement 30, déclenche la mise en oeuvre d'une initiation d'un attachement du modem 18 au réseau 12 choisi.

En particulier, le dispositif d'attachement 34 met en oeuvre un ensemble d'actions internes au dispositif d'attachement 34 nécessaires à l'aboutissement de l'attachement du modem 18 au réseau 12 choisi. L'ensemble d'actions interne est bien connu de l'homme du métier dans le cadre d'une procédure d'attachement à un autre réseau et n'est pas décrit plus en détails.

Si le réseau courant est le réseau choisi, l'étape d'attachement 108 n'est pas nécessaire puisque le modem 18 est déjà attaché au réseau choisi.

Il est à noter que les étapes de détermination du réseau choisi 106 et d'attachement 108 ont été décrites ci-dessus dans un cas où un attachement à au moins un réseau 12 est possible.

Toutefois, des circonstances dans lesquelles aucun attachement n'est possible sont également envisageables. Par exemple, au cours de l'étape d'attachement à chaque réseau 102, le modem 18 ne parvient à s'attacher à aucun réseau 12, notamment si aucun réseau 12 ne couvre l'emplacement où se trouve le modem 18. En variante, le modem 18 parvient à s'attacher à un ou plusieurs réseaux 12, mais aucun des réseaux ne présente une qualité de service suffisante.

Dans le cas où aucun attachement n'est possible, la phase de choix 100 comprend, à la place des étapes 106 et 108, une étape de renvoi d'une erreur. Par exemple, un signal d'erreur est affiché par le modem 18. Le signal est, par exemple, le fait qu'un voyant s'allume sur le modem 18.

Lorsqu'une erreur est renvoyée, la phase de choix 100 est mise en oeuvre périodiquement avec la fréquence prédéterminée.

Selon un deuxième mode de fonctionnement illustré en particulier par la figure 4, lorsque le modem 18 est connecté à un réseau 12 courant, la phase de choix de réseau 100 n'est pas mise en oeuvre périodiquement mais uniquement si la qualité de service du réseau courant 12 devient insuffisante (comme l'indique la flèche 110 formant une boucle entre les rectangles des signes de référence 112 et 102 sur la figure 3).

Par exemple, lors d'une étape 112, la qualité de service du réseau courant 12 est mesurée périodiquement pendant que le modem 18 est attaché au réseau courant, et la phase de choix 100 est mise en oeuvre si la qualité mesurée du réseau courant est strictement inférieure au seuil correspondant pendant une durée supérieure ou égale à une durée prédéterminée. La périodicité est montrée par une flèche 114 formant une boucle sur le rectangle de signe de référence 112.

Selon un troisième mode de fonctionnement, le module de décision 30 du modem 18 met en oeuvre la phase de choix 100 uniquement lors du démarrage du modem 18. Dans ce cas, le modem 18 reste attaché au réseau choisi lors du démarrage.

Le modem 18 est, par exemple, configuré pour mettre en oeuvre soit le premier, soit le deuxième, soit le troisième mode de fonctionnement.

Par exemple, le module de décision 30 du modem 18 est paramétrable par le dispositif de gestion 16 pour mettre en oeuvre soit le premier, soit le deuxième, soit le troisième mode de fonctionnement.

Il est à noter que des modes de fonctionnement combinant certains des premier, deuxième et troisième modes de réalisation sont aussi envisageables.

Le modem 18 est, par exemple, paramétrable par le dispositif de gestion 16 pour mettre en oeuvre la phase de choix 100 :

- au démarrage du modem 18, et/ou
- lorsqu'une qualité mesurée du réseau courant 12 devient insuffisante, et/ou
- de manière périodique lorsque le réseau courant 12 n'est pas le réseau préféré $12_A$ ou n'est pas le meilleur réseau initialement mesuré au démarrage du modem 18.

En particulier, le procédé peut être mis en oeuvre par un système et un produit programme d'ordinateur. L'interaction du produit programme d'ordinateur avec le système permet de mettre en oeuvre le procédé de gestion.

Le système est un ordinateur.

Plus généralement, le système est un calculateur électronique propre à manipuler et/ou transformer des données représentées comme des quantités électroniques ou physiques dans des registres du système et/ou des mémoires en d'autres données similaires correspondant à des données physiques dans des mémoires, des registres ou d'autres types de dispositifs d'affichage, de transmission ou de mémorisation.

Le système comporte un processeur comprenant une unité de traitement de données, des mémoires et un lecteur de support d'informations. Le système peut également comprendre un clavier et une unité d'affichage.

Le produit programme d'ordinateur comporte un support lisible d'informations.

Un support lisible d'informations est un support lisible par le système, usuellement par l'unité de traitement de données. Le support lisible d'informations est un médium adapté à mémoriser des instructions électroniques et capables d'être couplé à un bus d'un système informatique.

A titre d'exemple, le support lisible d'informations est une disquette ou disque souple (de la dénomination anglaise de « *floppy disk* »), un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations est mémorisé un programme d'ordinateur comprenant des instructions de programme.

Le programme d'ordinateur est chargeable sur l'unité de traitement de données et est adapté pour entraîner la mise en oeuvre d'un procédé de gestion.

Le procédé de gestion des accès permet d'assurer une bonne connectivité au modem 18, sans intervention d'un opérateur ou d'un utilisateur, même en cas de modification des caractéristiques des réseaux 12 disponibles postérieurement à la mise en service du modem 18. En particulier, le modem 18 s'attache ainsi spontanément à un réseau 12 offrant une qualité de service suffisante, si un tel réseau est disponible.

En outre, puisque le procédé favorise l'attachement au réseau préféré $12_A$, le modem 18 bénéficie plus fréquemment des avantages offerts par ce réseau que si seuls les critères de qualité de service étaient utilisés.

La mise en oeuvre de la phase de choix 100 au démarrage du modem 18 permet d'assurer une qualité de service suffisante dès le démarrage, et notamment d'éviter que le modem 18 tente de s'attacher, au démarrage, comme c'est souvent le cas, au dernier réseau 12 auquel il était attaché avant son extinction. Ainsi, la qualité de service disponible pour le modem 18 est suffisante même si ce dernier réseau 12 présente une qualité de service insuffisante voire n'est pas disponible.

Le paramétrage asynchrone permet à un unique dispositif de gestion 16 de gérer une pluralité de modems 18. Le fonctionnement du dispositif de gestion 16 indépendamment des MNO permet notamment de s'affranchir des contraintes de ceux-ci, qu'elles soient techniques, règlementaires ou contractuelles. Le procédé de gestion est donc plus efficace.

Le premier mode de mise en oeuvre, comprenant la mise en oeuvre périodique de la phase de choix 100 si le réseau 12 courant n'est pas le réseau préféré $12_A$ permet de maximiser la qualité de service du réseau 12 auquel le modem 18 est attaché. La fréquence de la phase de choix 100 est un compromis permettant l'obtention d'une bonne qualité. Notamment, une phase de choix 100 trop fréquente entraînerait une instabilité de la connexion.

Le deuxième mode de mise en oeuvre, comprenant la mise en oeuvre de la phase de choix 100 si la qualité de service du réseau courant devient insuffisante, permet de simplifier le fonctionnement du modem 18 et notamment de minimiser les besoins en termes de ressources, et de maximiser la disponibilité du service de connectivité du modem.

Le troisième mode de mise en oeuvre, comprenant uniquement la phase de choix 100 lors de la mise en service du modem 18, permet par exemple d'optimiser le déploiement d'un modem à usage fixe en sélectionnant automatiquement le réseau préféré $12_A$ ou le meilleur réseau 12 disponible sur le lieu d'installation du modem.

Ces trois modes de mise en oeuvre peuvent se combiner.

La mise en oeuvre périodique de la phase de choix 100 si aucun attachement n'est possible assure que le modem 18 sera connecté au réseau 12 le plus approprié dès qu'un ou plusieurs réseaux 12 avec une qualité de service suffisante seront disponibles.

Le modem 18 est particulièrement adaptable si les modes de mise en oeuvre sont paramétrables ou sélectionnables par le dispositif de gestion 16.

LEXIQUE

HSS : sigle de « Home Subscriber Server » pour « serveur central d'abonnés »

IMSI : sigle de « International Mobile Subscriber Identity » pour « identité internationale d'abonné mobile », également appelé numéro d'identification mobile

MNO : sigle de « Mobile Network Operator » pour « opérateur de réseau mobile », qui désigne une compagnie qui possède son propre réseau radio de télécommunication mobile

MVNE : sigle de « Mobile Virtual Network Enabler » pour « fournisseur de services de réseau mobile virtuel », qui désigne une compagnie offrant des solutions techniques permettant à un MVNO de proposer des services mobiles sans déployer de coeur de réseau mobile complet ni d'interconnexion directe avec un ou plusieurs MNO

MVNO : sigle de « Mobile Virtual Network Operator » pour « opérateur de téléphonie mobile virtuel », également appelé opérateur de services mobiles, qui désigne une compagnie de télécommunication qui, ne possédant pas de réseau d'accès radio en propre, loue les réseaux d'un ou plusieurs MVNE et/ou MNO pour pouvoir proposer des services mobiles

SIM : sigle de « Subscriber Identity Module » pour « module d'identification d'abonné »

2G : système de télécommunication de deuxième génération.

UMTS (ou 3G) : sigle de « Universal Mobile Télécommunications System » pour « système de télécommunication mobile universel »

4G : système de télécommunication de quatrième génération. La LTE (signe de « Long Term Evolution ») est un exemple de système de télécommunication de quatrième génération.

USIM : sigle de « Universal Subscriber Identity Module» pour « module d'identité du souscripteur universel»

**Revendications**

1. Procédé de gestion des accès à une infrastructure de télécommunication (10), l'infrastructure de télécommunication (10) comprenant :

- des réseaux de télécommunication (12), les réseaux (12) étant propres à fournir des services, les réseaux (12) appartenant à des opérateurs de réseau mobile, et
- un modem (18) propre à s'attacher aux réseaux (12), le modem (18) étant un modem gateway ou un modem routeur, le modem (18) comportant un terminal (32) et un dispositif d'attachement (34) propre à être installé dans le terminal (32), le dispositif d'attachement (34) étant :
- soit une carte SIM avec un profil multi-opérateurs,
- soit une carte USIM avec plusieurs profils mono-opérateurs,

le modem (18) comportant un module d'attachement (28) et un module de décision (30) distinct du module d'attachement (28), le module d'attachement (28) étant mémorisé dans une mémoire du dispositif d'attachement (34) du modem (18), le module de décision (30) étant mémorisé dans une mémoire du terminal (32), le module de décision (30) comportant des instructions logicielles, qui une fois exécutées par un processeur du terminal (32), mettent en oeuvre au moins certaines étapes du procédé de gestion, le module d'attachement (28) comportant des instructions logicielles, qui une fois exécutées respectivement par un microcontrôleur du dispositif d'attachement (34) sur la base d'instructions émises par le module de décision (30), mettent chacun en oeuvre au moins certaines étapes du procédé de gestion, l'infrastructure de télécommunication (10) comportant, en outre, un dispositif de gestion (16) propre à paramétrer le module de décision (30), le module de décision (30) fonctionnant indépendamment des opérateurs de réseau de télécommunication,
le procédé comportant une phase (100) de choix d'un réseau parmi les réseaux mémorisés dans une mémoire du module d'attachement (28) et autorisés par le dispositif de gestion (16), la phase (100) comportant les étapes de :

- pour chaque réseau, attachement (102) du modem (18) au réseau (12),
- pour chaque réseau, mesure (104) de la qualité de service fournie par le réseau lorsque le modem (18) est attaché au réseau, pour obtenir une qualité mesurée, l'étape de mesure étant mise en oeuvre par le module de décision (30),
- détermination (106) du réseau choisi, le réseau choisi étant soit le meilleur réseau, le meilleur réseau étant le réseau ayant la qualité mesurée la plus grande, soit un réseau préféré fournissant une qualité de service supérieure à un seuil de qualité de service minimum, l'étape de détermination étant mise en oeuvre par le module de décision (30) par transmission par le module de décision (30) au module d'attachement (28) d'un message de bascule pour le déclenchement de la mise en oeuvre d'une étape d'attachement au réseau choisi, le choix du réseau préféré ou du meilleur réseau dépendant d'un paramétrage du module de décision (30), et

- attachement (108) du modem (18) au réseau choisi s'il est différent du réseau courant, l'étape d'attachement étant déclenchée par le module d'attachement (28).

2. Procédé de gestion selon la revendication 1, dans lequel le dispositif de gestion (16) est propre à paramétrer le module de décision (30) par une communication asynchrone par rapport à la mise en oeuvre de la phase de choix (100) par le module de décision (30).

3. Procédé de gestion selon la revendication 1 ou 2, dans lequel la phase de choix (100) est mise en oeuvre au démarrage du modem (18).

4. Procédé de gestion selon l'une quelconque des revendications 1 à 3, dans lequel la phase de choix (100) est mise en oeuvre dès que la qualité de service fourni par le réseau courant est insuffisante, la qualité de service étant insuffisante lorsque ladite qualité de service est inférieure ou égale au seuil de qualité de service minimum.

5. Procédé de gestion selon l'une quelconque des revendications 1 à 3, dans lequel un réseau étant choisi au démarrage du modem (18), la phase de choix d'un réseau (100) est mise en oeuvre périodiquement si le réseau courant est différent du réseau préféré ou du réseau choisi au démarrage du modem (18).

6. Procédé de gestion selon l'une quelconque des revendications 1 à 5, dans lequel lorsqu'aucun attachement n'est possible dans la phase de choix (100), la phase de choix (100) se termine par le renvoi d'une erreur, et une nouvelle phase de choix (100) est mise en oeuvre périodiquement.

7. Produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en oeuvre d'un procédé selon l'une quelconque des revendications 1 à 6 lorsque le programme d'ordinateur est mis en oeuvre sur l'unité de traitement des données.

8. Support lisible d'informations mémorisant un programme d'ordinateur comprenant des instructions de programme, le programme d'ordinateur étant chargeable sur une unité de traitement de données et adapté pour entraîner la mise en oeuvre d'un procédé selon l'une quelconque des revendications 1 à 6 lorsque le programme d'ordinateur est mis en oeuvre sur l'unité de traitement des données.

9. Infrastructure de télécommunication (10), comprenant :

- des réseaux de télécommunication (12), les réseaux de télécommunication (12) étant propres à fournir des services, les réseaux (12) appartenant à des opérateurs de réseau mobile, et
- un modem (18) propre à s'attacher aux réseaux (12), le modem (18) étant un modem gateway ou un modem routeur, le modem (18) comportant
un terminal (32) et un dispositif d'attachement (34) propre à être installé dans le terminal (32), le dispositif d'attachement (34) étant :

- soit une carte SIM avec un profil multi-opérateurs,
- soit une carte USIM avec plusieurs profils mono-opérateurs,

le modem (18) comportant un module d'attachement (28) et un module de décision (30) distinct du module d'attachement (28), le module d'attachement (28) étant mémorisé dans une mémoire du dispositif d'attachement (34) du modem (18), le module de décision (30) étant mémorisé dans une mémoire du terminal (32), le module de décision (30) comportant des instructions logicielles, qui une fois exécutées par un processeur du terminal (32), mettent en oeuvre au moins certaines étapes du procédé de gestion, le module d'attachement (28) comportant des instructions logicielles, qui une fois exécutées respectivement par un microcontrôleur du dispositif d'attachement (34) sur la base d'instructions émises par le module de décision (30), mettent chacun en oeuvre au moins certaines étapes du procédé de gestion, l'infrastructure de télécommunication (10) comportant, en outre, un dispositif de gestion (16) propre à paramétrer le module de décision (30), le module de décision (30) fonctionnant indépendamment des opérateurs de réseau de télécommunication,

l'infrastructure de télécommunication (10) étant propre à choisir un réseau parmi les réseaux mémorisés dans une mémoire du module d'attachement (28) et autorisés par le dispositif de gestion (16) en :

- pour chaque réseau, attachant le modem (18) au réseau,
- pour chaque réseau, mesurant de la qualité de services fournis par le réseau lorsque le modem (18) est attaché au réseau, pour obtenir une qualité mesurée, la mesure étant mise en oeuvre par le module de décision (30),
- déterminant un réseau choisi, le réseau choisi étant soit le meilleur réseau , le meilleur réseau étant le réseau ayant la qualité mesurée la plus grande, soit un réseau préféré fournissant une qualité de service supérieure à un seuil de qualité de service minimum, la détermination étant mise en oeuvre par le module de décision (30) par transmission par le module de décision (30) au module d'attachement (28) d'un message de bascule pour le déclenchement de la mise en oeuvre d'un attachement au réseau choisi, le choix du réseau préféré ou du meilleur réseau dépendant d'un paramétrage du module de décision (30), et
- attachant le modem (18) au réseau choisi s'il est différent du réseau courant, l'attachement étant déclenché par le module d'attachement (28).

**Patentansprüche**

1. Zugangsverwaltungsverfahren zu einer Telekommunikationsinfrastruktur (10), die Telekommunikationsinfrastruktur (10) umfassend:

- Telekommunikationsnetzwerken (12), wobei die Netze (12) geeignet sind, Dienste bereitzustellen, wobei die Netzwerke (12) Mobilfunknetzbetreibern gehören, und
- ein Modem (18), das geeignet ist, um sich an die Netzwerke (12) anzubinden, wobei das Modem (18) ein Gateway-Modem oder ein Router-Modem ist, das Modem (18) umfassend ein Endgerät (32) und eine Anbindungsvorrichtung (34), die geeignet ist, in dem Endgerät (32) installiert zu werden, wobei die Anbindungsvorrichtung (34) wie folgt ist:
- eine SIM-Karte mit einem Multibetreiber-Profil,
- oder eine USIM-Karte mit mehreren Einzelbetreiber-Profilen,

das Modem (18) umfassend ein Anbindungsmodul (28) und ein von dem Anbindungsmodul (28) verschiedenes Entscheidungsmodul (30), wobei das Anbindungsmodul (28) in einem Speicher der Anbindungsvorrichtung (34) des Modems (18) gespeichert ist, das Entscheidungsmodul (30) in einem Speicher des Endgeräts (32) gespeichert ist, das Entscheidungsmodul (30) umfassend Softwareanweisungen, die, sobald sie von einem Prozessor des Endgeräts (32) ausgeführt werden, mindestens bestimmte Schritte des Verwaltungsverfahrens durchführen, das Anbindungsmodul (28) umfassend Softwarebefehle, die, sobald sie jeweils von einer Mikrosteuerung der Anbindungsvorrichtung (34) basierend auf von dem Entscheidungsmodul (30) ausgegebenen Befehlen ausgeführt werden, jeweils mindestens bestimmte Schritte des Verwaltungsverfahrens durchführen, die Telekommunikationsinfrastruktur (10) ferner umfassend eine Verwaltungsvorrichtung (16), die geeignet ist, um das Entscheidungsmodul (30) zu parametrieren, wobei das Entscheidungsmodul (30) unabhängig von den Telekommunikationsnetzbetreibern funktioniert,

das Verfahren umfassend eine Phase (100) einer Auswahl eines Netzwerks unter den in einem Speicher des Anbindungsmoduls (28) gespeicherten und von der Verwaltungsvorrichtung (16) autorisierten Netzwerken, die Phase (100) umfassend die folgenden Schritte:

- für jedes Netzwerk, Anbinden (102) des Modems (18) an das Netzwerk (12),
- für jedes Netzwerk, Messen (104) der Dienstqualität, die von dem Netzwerk bereitgestellt wird, wenn das Modem (18) an das Netzwerk angebunden ist, um eine gemessene Qualität zu erlangen, wobei der Schritt eines Messens von dem Entscheidungsmodul (30) durchgeführt wird,

- Bestimmen (106) des gewählten Netzwerks, wobei das gewählte Netzwerk entweder das beste Netzwerk ist, wobei das beste Netzwerk das Netzwerk ist, das die höchste gemessene Qualität aufweist, oder ein bevorzugtes Netz, das eine Dienstqualität bereitstellt, die höher ist als ein Mindestdienstqualitätsschwellenwert, wobei der Bestimmungsschritt von dem Entscheidungsmodul (30) durchgeführt wird, indem das Entscheidungsmodul (30) eine Umschaltmeldung zum Auslösen der Durchführung eines Schritts zum Anbinden an das gewählte Netzwerk an das Anbindungsmodul (28) sendet, wobei die Wahl des bevorzugten Netzwerks oder des besten Netzwerks von einer Parametrierung des Entscheidungsmoduls (30) abhängt, und

- Anbinden (108) des Modems (18) an das gewählte Netzwerk, wenn es sich von dem aktuellen Netzwerk unterscheidet, wobei der Schritt eines Anbindens durch das Anbindungsmodul (28) ausgelöst wird.

2. Verwaltungsverfahren nach Anspruch 1, wobei die Verwaltungsvorrichtung (16) geeignet ist, um das Entscheidungsmodul (30) durch eine asynchrone Kommunikation in Bezug auf die Durchführung der Auswahlphase (100) von dem Entscheidungsmodul (30) zu parametrieren.

3. Verwaltungsverfahren nach Anspruch 1 oder 2, wobei die Auswahlphase (100) beim Start des Modems (18) durchgeführt wird.

4. Verwaltungsverfahren nach einem der Ansprüche 1 bis 3, wobei die Auswahlphase (100) durchgeführt wird, sobald die vom aktuellen Netzwerkbereitgestellte Dienstqualität unzureichend ist, wobei die Dienstqualität unzureichend ist, wenn die Dienstqualität kleiner als oder gleich wie der Schwellenwert für die Mindestdienstqualität ist.

5. Verwaltungsverfahren nach einem der Ansprüche 1 bis 3, wobei ein Netzwerk beim Start des Modems (18) gewählt wird, die Auswahlphase eines Netzwerks (100) periodisch durchgeführt wird, wenn sich das aktuelle Netzwerk von dem bevorzugten Netzwerk oder dem beim Start des Modems (18) gewählten Netzwerk unterscheidet.

6. Verwaltungsverfahren nach einem der Ansprüche 1 bis 5, wobei, wenn in der Auswahlphase (100) keine Anbindung möglich ist, die Auswahlphase (100) mit der Rückgabe eines Fehlers endet und eine neue Auswahlphase (100) periodisch durchgeführt wird.

7. Computerprogrammprodukt, umfassend einen lesbaren Informationsträger, auf dem ein Computerprogramm umfassend Programmanweisungen gespeichert ist, wobei das Computerprogramm auf eine Datenverarbeitungseinheit geladen werden kann und angepasst ist, um die Durchführung eines Verfahrens nach einem der Ansprüche 1 bis 6 zu bewirken, wenn das Computerprogramm auf der Datenverarbeitungseinheit durchgeführt wird.

8. Lesbarer Informationsträger, auf dem ein Computerprogramm umfassend Programmanweisungen gespeichert ist, wobei das Computerprogramm auf eine Datenverarbeitungseinheit geladen werden kann und angepasst ist, um die Durchführung eines Verfahrens nach einem der Ansprüche 1 bis 6 zu bewirken, wenn das Computerprogramm auf der Datenverarbeitungseinheit durchgeführt wird.

9. Telekommunikationsinfrastruktur (10), umfassend:

- Telekommunikationsnetzwerke (12), wobei die Telekommunikationsnetzwerke (12) geeignet sind, um Dienste bereitzustellen, wobei die Netze (12) Mobilfunknetzbetreibern gehören, und
- ein Modem (18), das geeignet ist, um sich an die Netzwerke (12) anzubinden, wobei das Modem (18) ein Gateway-Modem oder ein Router-Modem ist, das Modem (18) umfassend ein Endgerät (32) und eine Anbindungsvorrichtung (34), die geeignet ist, in dem Endgerät (32) installiert zu werden, wobei die Anbindungsvorrichtung (34) wie folgt ist:

- eine SIM-Karte mit einem Multibetreiber-Profil,
- oder eine USIM-Karte mit mehreren Einzelbetreiber-Profilen,

das Modem (18) umfassend ein Anbindungsmodul (28) und ein von dem Anbindungsmodul (28) verschiedenes Entscheidungsmodul (30), wobei das Anbindungsmodul (28) in einem Speicher der Anbindungsvorrichtung (34) des Modems (18) gespeichert ist, das Entscheidungsmodul (30) in einem Speicher des Endgeräts (32) gespeichert ist, das Entscheidungsmodul (30) umfassend Softwareanweisungen, die, sobald sie von einem Prozessor des Endgeräts (32) ausgeführt werden, mindestens bestimmte Schritte des Verwaltungsverfahrens durchführen, das Anbindungsmodul (28) umfassend Softwarebefehle, die, sobald sie jeweils von einer Mikrosteuerung der Anbindungsvorrichtung (34) basierend auf von dem Entscheidungsmodul (30) ausgegebenen Befehlen ausgeführt werden, jeweils mindestens bestimmte Schritte des Verwaltungsverfahrens durchführen, die Telekommunikationsinfrastruktur (10) ferner umfassend eine Verwaltungsvorrichtung (16), die geeignet ist, um das Entscheidungsmodul (30) zu parametrieren, wobei das Entscheidungsmodul (30) unabhängig von den Telekommunikationsnetzbetreibern funktioniert,
wobei die Telekommunikationsinfrastruktur (10) geeignet ist, um ein Netzwerk aus den Netzwerken zu wählen, die in einem Speicher des Anbindungsmoduls (28) gespeichert sind und von der Verwaltungsvorrichtung (16) zu Folgendem autorisiert sind:

- für jedes Netzwerk, Anbinden des Modems (18) an das Netzwerk,
- für jedes Netzwerk, Messen der Qualität von Diensten, die von dem Netzwerk bereitgestellt werden, wenn das Modem (18) an das Netzwerk angebunden ist, um eine gemessene Qualität zu erlangen, wobei die Messung von dem Entscheidungsmodul (30) durchgeführt wird,
- Bestimmen eines gewählten Netzwerks, wobei das gewählte Netzwerk entweder das beste Netzwerk ist, wobei das beste Netzwerk das Netzwerk ist, das die höchste gemessene Qualität aufweist, oder ein bevorzugtes Netz, das eine Dienstqualität bereitstellt, die höher ist als ein Mindestdienstqualitätsschwellenwert, wobei das Bestimmen von dem Entscheidungsmodul (30) durchgeführt wird, indem das Entscheidungsmodul (30) eine Umschaltmeldung zum Auslösen der Durchführung eines Anbindens an das gewählte Netzwerk an das Anbindungsmodul (28) sendet, wobei die Wahl des bevorzugten Netzwerks oder des besten Netzwerks von einer Parametrierung des Entscheidungsmoduls (30) abhängt, und
- Anbinden des Modems (18) an das gewählte Netzwerk, wenn es sich vom aktuellen Netzwerk unterscheidet, wobei das Anbinden durch das Anbindungsmodul (28) ausgelöst wird.

**Claims**

1.  Method for managing access to a telecommunication infrastructure (10), wherein the telecommunication infrastructure (10) comprises:

    - telecommunication networks (12), wherein the networks (12) are able to provide services and networks (12) belonging to mobile network operators, and
    - a modem (18) suitable for attaching to the networks (12), the modem (18) being a gateway modem or a modem router, the modem (38) comprising a terminal (32) and an attachment device (34) adapted to be installed on the terminal (32), the attachment device (34) being:
    - either a SIM card with a multi-operator profile,
    - or a USIM card with several mono-operator profiles,

      the modem (18) comprising an attachment module (28) and a decision module (30) separate from the attachment module (28), the attachment module (28) being stored in a memory of the attachment device (34) of the modem (18), the decision module (30) being stored in a memory of the terminal (32), the decision module (30) comprising software instructions, which when executed by the processor of the terminal (32), carry out at least some steps of the method for managing, the attachment module (28) comprising software instructions, which when respectively executed by a microcontroller of the attachment device (34) on the basis of instructions issued by the decision module (30), carry out at least some steps of the method for managing, the telecommunication infrastructure (10) further comprising a management device (16) adapted to parametrize a decision module (30), the decision module (30) operating independently from the mobile network operators, the method comprising a phase (100) of selection of a network among networks stored in the memory of the attachment module (28) and authorized by the management device (16), the phase (100) comprising the steps of:

      - attachment (102) of the modem (18) to the network for each network,

- measurement (104) of the quality of service provided by the network for each network when the modem (18) is attached to the network in order to obtain a measured quality, the step of measurement being carried out by the decision module (30),
- determination (106) of the selected network, wherein the selected network is either the better network, the better network being the network having the highest measured quality, or a preferred network providing a quality of service higher than a threshold of minimum quality of service, the step of determining being carried out by the decision module (30) by transmitting by the decision module (30) to the attachment module (18) a latch message for triggering the implementation of the step of attachment to the selected network, the choice of the preferred network or of the better network depending from the parametrizing of the decision module (30), and
- attachment (108) of the modem (18) to the selected network if it is different from the current network, the step of attachment being triggered by the attachment module (18).

2. Management method according to claim 1, wherein the management device (16) is adapted to parametrize the decision module (30) by an asynchronous communication, the communication being asynchronous with relation to the implementation of the phase of selecting (100) by the decision module (30).

3. Management method according to claim 1 or 2, wherein the phase of selecting (100) is implemented upon the startup of the modem (18).

4. Management method according to any one of claims 1 to 3, wherein the phase of selecting (100) is implemented as soon as the quality of services provided by the current network is insufficient, the quality of services being insufficient when said quality of services is inferior or equal to a threshold of minimum quality of services.

5. Management method according to any one of claims 1 to 3, wherein a network being chosen at the start of the modem (18), the phase of selecting a network (100) is implemented periodically if the current network is different from the preferred network or the network initially selected at the start of the modem (18).

6. Management method according to any one of claims 1 to 5, wherein, when no attachment is possible in the selection phase (100), the selection phase (100) ends with an error feedback, and a new selection phase (100) is periodically implemented.

7. Computer program product comprising a readable information medium, on which is stored a computer program comprising program instructions, wherein the computer program is loadable on a data processing unit and is adapted to train the computer by implementing a method according to any one of claims 1 to 6 when the computer program is implemented on the data processing unit.

8. Readable information support storing a computer program comprising program instructions, wherein the computer program is loadable on a data processing unit and is designed to cause the implementation of a method according to one of any of claims 1 to 6 when the computer program is implemented on the data processing unit.

9. - Telecommunication infrastructure (10), comprising:

- telecommunication networks (12), the telecommunication networks (12) being able to provide services, the networks (12) belonging to mobile network operators, and
- a modem (18) suitable for attaching to the networks (12), the modem (18) being a gateway modem or a modem router, the modem (38) comprising a terminal (32) and an attachment device (34) adapted to be installed on the terminal (32), the attachment device (34) being:
- either a SIM card with a multi-operator profile,
- or a USIM card with several mono-operator profiles,

the modem (18) comprising an attachment module (28) and a decision module (30) separate from the attachment module (28), the attachment module (28) being stored in a memory of the attachment device (34) of the modem (18), the decision module (30) being stored in a memory of the terminal (32), the decision module (30) comprising software instructions, which when executed by the processor of the terminal (32), carry out at least some steps of the method for managing, the attachment module (28) comprising software instructions, which when respectively executed by a microcontroller of the attachment device (34) on the basis of instructions issued by the decision module (30), carry out at least some steps of the method for managing, the telecommunication infrastructure (10) further comprising a management device (16) adapted to parametrize a decision module (30), the decision module (30) operating independently from the mobile network operators,
the telecommunication infrastructure (10) being adapted to select a network among networks stored in the memory of the attachment module (28) and authorized by the management device (16) by:

- attaching the modem (18) to the network for each network,
- measuring the quality of service provided by the network for each network when the modem (18) is attached to the network in order to obtain a measured quality, the measurement being carried out by the decision module (30),
- determining the selected network, wherein the selected network is either the better network, the better network being the network having the highest measured quality, or a preferred network providing a quality of service higher than a threshold of minimum quality of service, the determining being carried out by the decision module (30) by transmitting by the decision module (30) to the attachment module (18) a latch message for triggering the implementation of the step of attachment to the selected network, the choice of the preferred network or of the better network depending from the parametrizing of the decision module (30), and
- attaching of the modem (18) to the selected network if it is different from the current network, the step of attaching being triggered by the attachment module (18).

FIG.1

EP 3 562 197 B1

-32-

34

18

FIG.2

FIG.3

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012196644 A1
- US 2015119101 A1
- US 2014190909 A1
- US 2014192634 A1
- US 2017150470 A1